# EUROPEAN PATENT APPLICATION

(11) **EP 1 883 253 A1**
(43) Date of publication of application: **30.01.2008**
(21) Application number: 06756358.5
(22) Date of filing: 19.05.2006
(51) Int. Cl.: H04N 17/00

(54) **VIDEO SYSTEM**

(30) Priority: 19.05.2005 JP 2005146868
(71) Applicant: MATSUSHITA ELECTRIC INDUSTRIAL CO., LTD., Osaka 571-8501 (JP)
(72) Inventor: YOSHIOKA, Kenji, Matsushita El. Ind. Co., Ltd.,IPROC, Chuo-ku, Osaka-shi, Osaka 540-6207 (JP)
(74) Representative: Pautex Schneider, Nicole Véronique
(86) International application number: PCT/JP2006/310002
(87) International publication number: WO 2006/123770

(57) **Abstract**

[PROBLEM]

It is an object of the present invention to provide a video system capable of detecting a cause of abnormality of a transmission path of a video signal.

[MEANS FOR SOLVING]

The video system 1 comprising a video receiving unit 3 for obtaining a video signal, and a video signal processing device 4 for having a display device 5 display the obtained video signal, in which the video receiving unit 3 is operative to determine that a transmission path having the video signal transmitted to the video signal processing device 4 is in one of a normal state, an open state, a power connected state, and a ground connected state based on a direct current signal level obtained from the transmission path of the video signal.

## Description

### TECHNICAL FIELD OF THE INVENTION

The present invention relates to a video system for having a display device display an obtained video signal.

### DESCRIPTION OF THE RELATED ART

Up until now, there has been proposed a video system for having a display device display an obtained video signal, the video system being adapted to judge as having an abnormality when a logical value indicated by parallel signals of a predetermined number of bits indicative of the video signal is less than a predetermined threshold value set at a value less than a dark output value for a predetermined time period, thereby enabling to diagnose a failure even if at least one of a plurality of input paths of the parallel signals may disconnected or short-circuited, without increasing circuit construction (see, for example, Patent Document 1).

Patent Document 1: Japanese Laid-Open Patent Publication No. H0.8-19007

### SUMMARY OF THE INVENTION

### PROBLEMS TO BE SOLVED BY THE INVENTION

The conventional video system, however, encounters a drawback that a cause of an abnormality in a transmission path of the video signal cannot be located although the transmission path of the video signal may be diagnosed as being disconnected or short-circuited.

The present invention is made for the purpose of overcoming the conventional problems, and it is an object of the present invention to provide a video system which can locate the cause of the abnormality in the transmission path of the video signal.

### MEANS FOR SOLVING THE PROBLEMS

In accordance with a first aspect of the present invention, there is provided a video system, comprising a video signal obtaining device for obtaining a video signal; and a video signal processing device for having a display device display said video signal obtained by said video signal obtaining device, and in which said video signal obtaining device includes path state judging means for determining that a transmission path having said video signal transmitted to said video signal processing device is in one of a normal state, an open state, a power connected state, and a ground connected state based on a direct current signal level obtained from said transmission path of said video signal.

The video system according to the present invention thus constructed as previously mentioned can locate the cause of the abnormality in the transmission path of the video signal, resulting from the fact that the video signal obtaining device determines that the transmission path of the video signal is in one of the normal state, the open state, the power connected state, and the ground connected state, based on the direct current signal level obtained from the transmission path of the video signal.

Further, said video signal processing device may change an input impedance based on whether or not said video signal processing device is in a state capable of receiving said video signal, and said path state judging means is operative to judge whether or said video signal processing device is in a state capable of receiving said video signal based on said input impedance.

The video system according to the present invention thus constructed as previously mentioned can judge whether or not the video signal processing device is operating normally in the case that the transmission path of the video signal is in the normal state.

Further, said video signal processing device may change said input impedance using two resistors, and may electrically isolate said two resistors from said transmission path when a voltage value applied to said transmission path becomes greater than a predetermined threshold value.

The video system according to the present invention thus constructed as previously mentioned can prevent two resistors of the video signal processing device, from being damaged due to high voltage.

Further, said video signal obtaining device may include a pull-up circuit for pulling up a voltage value applied to said transmission path, and said path state judging means may determine that said transmission path is in said open state when said voltage value applied to said transmission path is within a predetermined range including a voltage value pulled up by said pull-up circuit.

Further, said video signal obtaining device may include pull-up switching means for switching an electrical connection between said pull-up circuit and said transmission path from one of a connecting state and a non-connecting state to the other.

The video system according to the present invention thus constructed as previously mentioned can prevent the video signal from being attenuated due to the pull-up circuit by switching connection between the pull-up circuit and the transmission path to the non-connecting state.

Further, said video signal obtaining device may include a zener diode having a cathode connected with a side of said transmission path, and an anode connected to ground, and said path state judging means may determine that said transmission path is in said power connected state when a voltage value applied to said cathode of said zener diode is within a predetermine range including a zener voltage value of said zener diode.

Further, said path state judging means may determine that said transmission path is in said ground connected state when a voltage value of said video signal is within a predetermine range including a ground level.

In accordance with a second aspect of the present invention, there is provided a video signal processing device for having a display device display a video signal transmitted thereto, in which said video signal processing device is operative to change an input impedance based on whether or not said video signal processing device is in a state capable of receiving said video signal.

The video signal processing device according to the present invention thus constructed as previously mentioned can inform the video signal transmitting side whether or not the video signal processing device is operating normally, in the case that the transmission path of the video signal is in the normal state.

### ADVANTAGEOUS EFFECT OF THE INVENTION

The present invention can provide a video system having advantageous effects of locating the cause of abnormality in the transmission path of the video signal.

### BRIEF DESCRIPTION OF THE DRAWINGS

FIG. 1 is a block diagram showing a preferred embodiment of a video system according to the present invention.
FIG. 2 is a block diagram showing a matching circuit for a video receiving unit and a video processing device forming part of the preferred embodiment of the video system according to the present invention.

### EXPLANATION OF THE REFERENCE NUMERALS

- 1: video system
- 2: camera unit
- 3: video receiving unit
- 4: video signal processing device
- 5: display device
- 10, 31: CPU
- 11: matching circuit
- 12: first video signal buffer
- 13: synchronous separating circuit
- 14: image processing unit
- 15: second video signal buffer
- 16: video selecting switch
- 17: video amplifier
- 18: DRAM
- 19: flash memory
- 20: diagnosis memory
- 30: Video signal obtaining unit
- 40, 41: AND CIRCUIT
- R1, R2, R11, R12, R13, R14, R15: resistor
- C 1: capacitor
- D1: diode
- ZD: zener diode
- T1, T2: transistor
- S1, S11, S12: switch

### DESCRIPTION OF THE PREFERRED EMBODIMENTS

A preferred embodiment of a video system according to the present invention will be described hereinafter with reference to accompanying drawings. It is assumed in the present embodiment that the video system comprises a video receiving unit mounted on an automotive vehicle, and a video signal obtaining device according to the present invention is applied to the video receiving unit. The video signal obtaining device according to the present invention may be applicable to, for example, a camera unit, a navigation unit, and a DVD (Digital Versatile Disc) player, or the like, in addition to the video receiving unit.

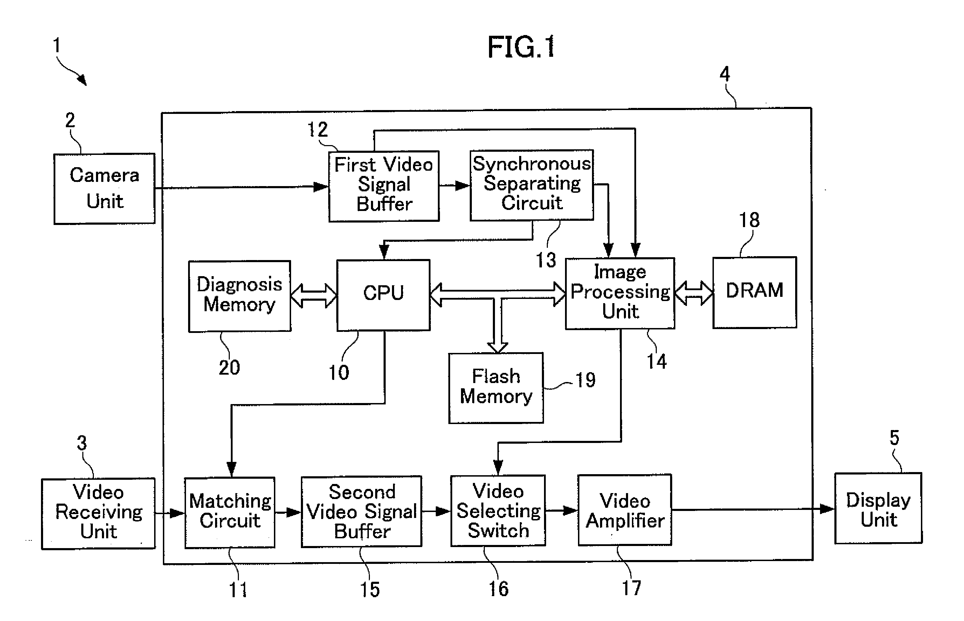

FIG. 1 shows a preferred embodiment of a video system according to the present invention.

The video system 1 comprises a camera unit 2 for taking an image in the rear of an automotive vehicle, a video receiving unit 3 constituted by a television unit, a video signal processing device 4 for processing video signals received by the camera unit 2 and the video receiving unit 3, and a display device 5 for displaying the video signals processed by the video signal processing device 4.

The camera unit 2 includes a lens and a CCD (Charged Coupled Device) sensor for taking images, and is adapted to generate a video signal outputted from the CCD sensor. Here, the video signal may include, a composite signal, RGB signal, YUV signal, and/or the like.

The display device 5 includes a display portion such as, for example, a cathode-ray tube, a liquid crystal display, and/o the like, and is adapted to have the display portion display the video signal.

The video signal processing device 4 includes a CPU (Central Processing Unit), a first video signal buffer 12 for buffering the video signal inputted from the camera unit 2, a synchronous separating circuit 13 for separating a synchronous signal from the video signal inputted from the camera unit 2, an image processing unit 14 for carrying out an image processing, a matching circuit 11 for matching an input impedance in a transmission path of the video signal transmitted from the video receiving unit 3, a second video signal buffer 15 for buffering the video signal transmitted from the video receiving unit 3, a video selecting switch 16 for selecting one video signal from among the video signal image-processed by the image processing unit 14 and the video signal transmitted from the video receiving unit 3, a video amplifier 17 for amplifying the video signal selected by the video selecting switch 16, a DRAM(Dynamic Random Access Memory) 18, a flash memory 19, a diagnosis memory 20 for storing therein a result of a failure diagnosis, and a power supply unit, not shown, for supplying power to constituent components of the video signal processing device 4 and the camera unit 2.

Here, "normal state" is intended to means a state that the transmission path of the video signal is normally connected between the video receiving unit 3 and the video signal processing device 4, "open state" is intended to mean a state that the transmission path of the video signal is isolated from the video receiving unit 3 or the video signal processing device 4, "power connected state" is intended to mean a state that power voltage is applied to the transmission path of the video signal, and "ground connected state" is intended to mean a state that the transmission path of the video signal is short-circuited to ground.

The CPU 10 is adapted to read out program stored in a storage medium such as, for example, a ROM (Read Only Memory), not shown, to be written into the DRAM 18, and execute the programs stored in the DRAM 18 to control the constituent components of for example, the image processing unit 14, the video selecting switch 16, and the power supply unit.

The first video signal buffer 12 is adapted to buffer therein the video signal inputted from the camera unit 2, as well as fix a pedestal level (reference value of brightness) .

The synchronous separating circuit 13 is adapted to separate a synchronous signal from the vide signal buffered in the first video signal buffer 12. The CPU 10 is adapted to monitor a cycle of the synchronous signals separated by the synchronous separating circuit 13 and judge that the video signal is abnormal when the cycle of the synchronous signals is different from a predetermined cycle.

The image processing unit 14 is constituted by a digital signal processing device such as, for example, an image processor, and/or the like, and adapted to carry out a downward-view processing, a guideline drawing processing, and/or the like, on the video signal buffered in the first video signal buffer 12, under the control of the CPU 10.

Here, the downward-view processing is intended to mean a linear processing on a video image indicative of a curved portion of, for example, a bumper disposed in the vicinity of the vehicle body, so as to create a pseudo video image as if it is imaged from a position higher than the actual position of the camera unit 2. The guideline drawing processing is intended to mean a processing to draw information indicative of a driving direction, a distance from the other vehicles, and the like on the video image.

The second video signal buffer 15 is adapted to buffer therein the video signal inputted from the video receiving unit 3, as well as fix a pedestal level (reference value of brightness).

The video selecting switch 16 is adapted to select one video signal from among video signals image-processed and outputted from the image processing unit 14, and inputted from the video receiving unit 3 under the control of the CPU 10.

The video amplifier 17 is adapted to amplify the video signal selected by the video selecting switch 16 to have a signal level of the video signal adjusted to a signal level defined for the display device 5.

The DRAM 18 is adapted to temporarily store therein data to be used by the CPU 10 and the image processing unit 14 for computing operations, in addition to the programs to be executed by the CPU 10. The flash memory 19 is adapted to store therein parameters and the like, to be used by the image processing unit 14.

The diagnosis memory 20 is constituted by a nonvolatile storage medium such as, for example, an EEPROM (Electrically Erasable Programmable Read-only Memory). The diagnosis memory 20 is adapted to store therein a history of the abnormalities detected by the synchronous separating circuit 13 such as, for example, a state of detected abnormality, a time at which the abnormality was detected, and the like, under the control of the CPU 10.

The CPU 10 is adapted to transfer information stored in the diagnosis memory 20 to a removable storage medium, not shown, and an interface circuit, not shown, for communicating with an external device.

The power supply unit is adapted to adjust, for example, step down, power supplied from a power source of the automotive vehicle to have the voltage-adjusted power supplied to the constituent components of the video signal processing device 4 and the camera unit 2, under the control of the CPU 10. The power supply unit is adapted to cup off the power supply to the CPU 10 and the camera unit 2 in order to prevent latch-up from being occurred in the CPU 10 and the camera unit 2 when the CPU 10 is made inactive.

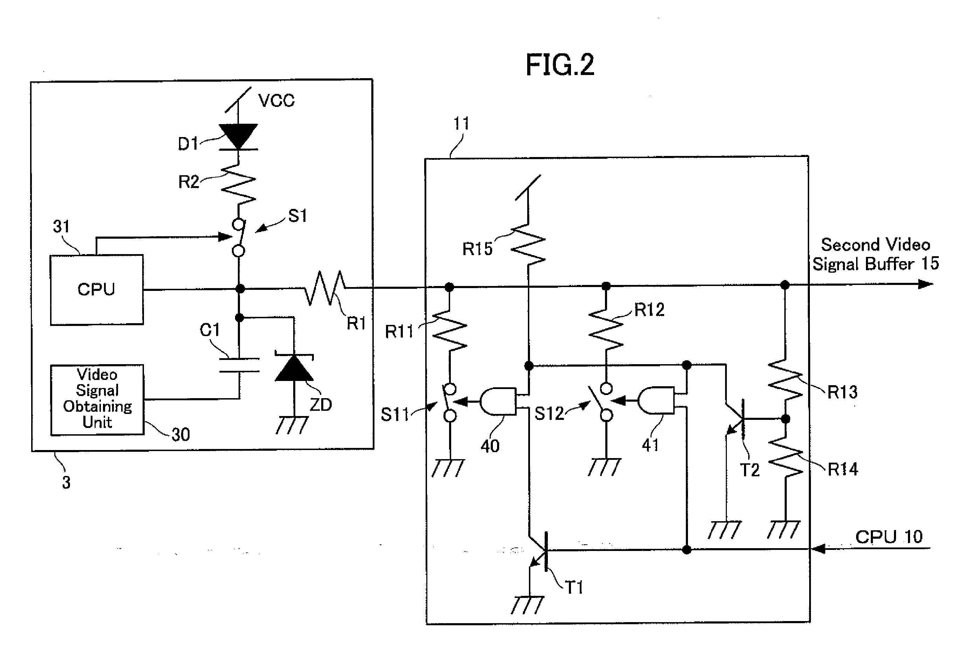

FIG 2 is a block diagram showing a matching circuit 11 for the video receiving unit 3 and the video signal processing device 4.

The video receiving unit 3 includes a video signal obtaining unit 30 for modulating a video signal received through an antenna to receive the video signal, a CPU 31, a switch S1, a capacitor C1, resistors R1 and R2, a diode D1, and a zener diode ZD.

The CPU 31 is adapted to read out programs stored in a storage medium such as, for example, a ROM (Read Only Memory), not shown, to be written into a RAM, not shown, and execute the programs stored in the RAM to control the constituent components of the video signal obtaining unit 30, and the like.

The CPU 31 constitutes path state judging means according to the present invention, and is connected with a transmission path through the resistor R1 so as to have the output impedance matched with an input impedance of the video signal processing device 4.

The capacitor C1 has one end connected with the video signal obtaining unit 30 so as to isolate direct current components from the video signal obtained by the video signal obtaining unit 30, and the other end connected with transmission path through the resistor R1,

The zener diode ZD has an anode connected to ground, and a cathode connected with the transmission path through the resistor R1. The zener diode ZD is designed to suppress a voltage value of the signal inputted to the CPU 31 toward a level equal to or less than a zener voltage value of the zener diode ZD, in order to prevent latch-up from being occurred in the CPU 31 when the transmission path is in the power connected state.

The resistor R2 has one end connected with a cathode of the diode D1 having an anode which a direct current voltage VCC is applied to. The switch S1 has one end connected with the transmission path. The other end of the resistor R2 is connected with the other one end of the switch S1. The resistor R2 and the diode D1 collectively constitute a pull-up circuit.

The switch S1 and the CPU 31 collectively constitute pull-up switching means according to the present invention. The switch S1 is adapted to switch an electrical connection between the pull-up circuit and the transmission path from one of a connecting state and a non-connecting state to the other under the control of the CPU 31. For example, the CPU 31 can prevent the video signal from being attenuated due to the pull-up circuit by turning off the switch S 1 in the case that the video signal is transmitted without detecting abnormality in the transmission path.

The matching circuit 11 of the video signal processing device 4 includes resistors R11 to R15, AND (logical multiplication) circuits 40 and 41, transistors T1 and T2, and switches S 11 and S 12.

The resistor R11 and the resistor R12 are different from each other in resistance value, but respectively have one ends connected with the transmission path of the video signal and the other ends respectively connected with one ends of the switch S11 and the switch S12. The switch S11 and the switch S12 have the other ends respectively connected to ground.

The transistor T1 has an emitter connected to ground, a base connected with the CPU 10 and a first input terminal of the AND circuit 41, a collector connected with a first terminal of the AND circuit 40, in order to ensure that a signal outputted from the CPU 10 is exclusively inputted to the first terminals of the AND circuit 40 and the AND circuit 41.

This means that the transistor T1 is operated to make the first input terminal of the AND circuit 40 become low level (hereinlater simply referred to as "L"), for example, equal to or less than 0.7 when the CPU 10 makes the first input terminal of the AND circuit 41 become high level (hereinlater simply referred to as "H"), for example, equal to or greater than 2.1V, and, on the other hand, make the first input terminal of the AND circuit 40 become H when the CPU 10 makes the first input terminal of the AND circuit 41 become L.

The resistor R13 and the resistor R14 are connected with each other in series. One end of the resistor R13 is connected with the transmission path, and one end of the resistor R14 is connected to ground, so as to divide the voltage applied to the transmission path.

The transistor T2 has an emitter connected to ground, a base connected between the resistor R13 and the resistor R14, and a collector connected with seconds input terminals of the AND circuit 40 and the AND circuit 41, and one end of the resistor R15 having the other end which direct current voltage is applied to, thereby ensuring that second input terminals of the AND circuit 40 and the AND circuit 41 become L when the voltage of the transmission path becomes above a predetermined threshold value.

The resistor R13, the resistor R14, and the transistor T2 constitute a protection circuit for the resistor R11 and the resistor R12, and are adapted to turn on the transistor T2 and thus turn off the switch S11 and the switch S12 thereby ensuring that the resistor R11 and the resistor R12 are isolated from the transmission path, in the event that voltage applied to the resistor R11 or resistor R12 becomes greater than a threshold value.

Here, the threshold value is determined in accordance with withstand voltage values of the resistor R11 and resistor R12. The resistance values of the resistance R13 and the R14 are determined in accordance with the threshold value.

Output terminals of the AND circuit 40 and the AND circuit 41 are respectively connected with switching terminals of the switch S11 and the switch S12. The switch S11 and the switch S12 are turned on and off respectively in conjunction with output terminals of the AND circuit 40 and the AND circuit 41 changing between H and L.

The operation of the video system 1 thus constructed will be described hereinlater.

When an ignition power or an accessory power is turned on, the power supply unit is operated to supply power to the constituent components of the video signal processing device 4, and then the constituent components of the video signal processing device 4 is activated.

The video signal inputted from the video receiving unit 3 is selected by the video selecting switch 16, in the case that a vehicle driver is not required to watch images in the rear of the automotive vehicle, for example, when a reverse gear is not engaged. The video signal received by the video receiving unit 3 is transmitted to the video signal processing device 4. In the video signal processing device 4, the received video signal is inputted to the video amplifier 17 through the second video signal buffer 15 and the video selecting switch 16.

On the other hand, power is supplied from the power supply unit to the camera unit 2 to have the camera unit 2 activated, and the video signal image-processed by the image processing unit 14 is selected by the video selecting switch 16, in the case that the vehicle driver is required to watch images in the rear of the automotive vehicle, for example, when the reverse gear is engaged.

The video signal outputted from the camera unit 2 is inputted to the video signal processing device 4. In the video signal processing device 4, the video signal inputted from the camera unit 2 is inputted to the image processing unit 14 through the first video signal buffer 12, and image-processed by the image processing unit 14. The video signal image-processed by the image processing unit 14 is inputted to the video amplifier through the video selecting switch 16.

The video signal thus inputted to the video amplifier 17 is amplified by the video amplifier 17 and then outputted to the display device 5, to be displayed by the display device 5.

The operation of the video receiving unit 3 and the matching circuit 11 of the video signal processing device 4 will be described in detail with reference to FIG. 2. It is hereinlater assumed that the resistance value of the resistor R1 is, by way of example, 75Ω, the resistance value of the resistor R2 is, by way of example, 330Ω, the resistance value of the resistor R11 is, by way of example, 75Ω, the resistance value of the resistor R12 is, by way of example, 120Ω, the voltage value VCC applied to the resistor R2 is, by way of example, 3.3V, and voltage value Vd dropped by the diode D1 is 0.6V

When the transmission path of the video signal is in the normal state, and the video signal transmitted from the video receiving unit 3 is selected by the video selecting switch 16, i.e., the video signal processing device 4 is in a state capable of receiving the video signal transmitted from the video receiving unit 3, the CPU 10 is operated to set the first input terminal of the AND circuit 41 at L, and the transistor T1 is operated to set the first input terminal of the AND circuit 40 at H.

Then, the voltage level of the direct current component of the transmission path becomes the voltage VCC applied to the resistor R2 minus voltage value dropped by the diode D1, divided by the total resistance values of the resistor R2, the resistor R1, and resistor R11, and multiplied by the resistance values of the resistor R1 and the resistor R11, viz., (VCC-Vd) × (R1 + R11) ÷(R2 + R1 +R11) = 0.8V.

Accordingly, it is concluded that the CPU 31 is operated to detect the voltage value of approximately 0.8V when the transmission path of the video signal is in the normal state, and the video signal processing device 4 is receiving the video signal outputted from video receiving unit 3.

When the transmission path of the video signal is in the normal state, and the video signal taken by the camera unit 2 and image-processed by the image processing unit 14 is selected by the video selecting switch 16, i.e., the video signal processing device 4 is not in the state capable of receiving the video signal transmitted from the video receiving unit 3, the CPU 10 is operated to set the first input terminal of the AND circuit 41 at H, and the transistor T1 is operated to set the first input terminal of the AND circuit 40 at L.

Then, the voltage level of the direct current component of the transmission path becomes the voltage VCC applied to the resistor R2 minus voltage value dropped by the diode D1, divided by the total resistance values of the resistor R2, the resistor R1, and resistor R12, and multiplied by the resistance values of the resistor R1 and the resistor R12, viz., (VCC-Vd) × (R1 + R12) ÷ (R2 + R1 + R12) ≒ 1.0V.

Accordingly, it is concluded that the CPU 31 is operated to detect the voltage value of approximately 1.0V when the transmission path of the video signal is in the normal state, and the video signal processing device 4 is not receiving the video signal outputted from video receiving unit 3.

When the transmission path of the video signal is in the open state, the output path of the video signal is pulled-up by the pull-up circuit constituted by the diode D1 and the resistor R2. Accordingly, the CPU 31 is operated to detect the voltage value pulled-up by the pull-up circuit, viz., VCC-Vd = 2.7V

When the transmission path of the video signal is in the power connected state, the CPU 31 is operated to detect the zener voltage value of the zener diode ZD, i.e., 3.3V in the present embodiment.

When the transmission path of the video signal is in the ground connected state, the CPU 31 is operated to detect the ground level, i.e., OV

Accordingly, in the present embodiment, the CPU 31 is operated to determine that the transmission path of the video signal is in the power connected state when the detected voltage value is equal to or greater than 3.0V, that the transmission path of the video signal is in the open state when the detected voltage value is less than 3.0V but equal to or greater than 1.9V, that the transmission path of the video signal is in the normal state and the video signal processing device 4 is not receiving the video signal outputted from the video receiving unit 3 when the detected voltage value is less than 1.9V and equal to or greater than 0.9V, that the transmission path of the video signal is in the normal state and the video signal processing device 4 is receiving the video signal outputted from the video receiving unit 3 when the detected voltage value is less than 0.9V and equal to or greater than 0.4V, and that the transmission path of the video signal is in the ground connected state when the detected voltage value is less than 0.4V.

From the foregoing description, it will be appreciated that the present embodiment of the video system 1 according to the present invention can locate the cause of the abnormality in the transmission path of the video signal, resulting from the fact that the present embodiment of the video system 1 determines that the transmission path of the video signal is one of the normal state, the open state, the power connected state, and the ground connected state based on the voltage value detected by the CPU 31.

Further, the video receiving unit 3 may further comprise a low pass filter on the input side of the CPU 31, so as to eliminate alternating current components to be inputted to the CPU 31.

Further, the switches S11 and S12 may be constituted by a transistor, an FET (Field-Effect Transistor), and/or the like.

### INDUSTRIAL APPLICABILITY

As will be appreciated from the foregoing description, the video system according to the present invention has advantageous effects of locating cause of an abnormality in the transmission path of the video signal, and is available as a video system for having a display device display the obtained video signal.

## Claims

1. A video system, comprising a video signal obtaining device for obtaining a video signal; and a video signal processing device for having a display device display said video signal obtained by said video signal obtaining device, and in which
said video signal obtaining device includes path state judging means for determining that a transmission path having said video signal transmitted to said video signal processing device is in one of a normal state, an open state, a power connected state, and a ground connected state based on a direct current signal level obtained from said transmission path of said video signal.

2. A video system as set forth in claim 1, in which
said video signal processing device is operative to change an input impedance based on whether or not said video signal processing device is in a state capable of receiving said video signal, and
said path state judging means is operative to judge whether or said video signal processing device is in a state capable of receiving said video signal based on said input impedance.

3. A video system as set forth in claim 2, in which said video signal processing device is operative to change said input impedance using two resistors, and to electrically isolate said two resistors from said transmission path when a voltage value applied to said transmission path becomes greater than a predetermined threshold value.

4. A video system as set forth in claim 1, in which
said video signal obtaining device includes a pull-up circuit for pulling up a voltage value applied to said transmission path, and
said path state judging means is operative to determine that said transmission path is in said open state when said voltage value applied to said transmission path is within a predetermined range including a voltage value pulled up by said pull-up circuit.

5. A video system as set forth in claim 4, in which
said video signal obtaining device includes pull-up switching means for switching an electrical connection between said pull-up circuit and said transmission path from one of a connecting state and a non-connecting state to the other.

6. A video system as set forth in claim 1, in which
said video signal obtaining device includes a zener diode having a cathode connected with a side of said transmission path, and an anode connected to ground, and
said path state judging means is operative to determine that said transmission path is in said power connected state when a voltage value applied to said cathode of said zener diode is within a predetermine range including a zener voltage value of said zener diode.

7. A video system as set forth in claim 1, in which
said path state judging means is operative to determine that said transmission path is in said ground connected state when a voltage value of said video signal is within a predetermine range including a ground level.

8. A video signal processing device for having a display device display a video signal transmitted thereto, in which
said video signal processing device is operative to change an input impedance based on whether or not said video signal processing device is in a state capable of receiving said video signal.

9. A video system, comprising a video signal obtaining device for obtaining a video signal; a display device for displaying said video signal, and a video signal processing device for having said display device display said video signal obtained by said video signal obtaining device, and in which
said video signal obtaining device includes path state judging means for determining that a transmission path having said video signal transmitted to said video signal processing device is in one of a normal state, an open state, a power connected state, and a ground connected state based on a direct current signal level obtained from said transmission path of said video signal.
